# EUROPEAN PATENT SPECIFICATION

(11) **EP 0 750 715 B1**
(45) Date of publication and mention of the grant of the patent: **16.06.1999**
(21) Application number: 95912319.1
(22) Date of filing: 20.03.1995
(51) Int. Cl.: E21B 21/10

(54) **VALVE FOR USE IN FLOAT EQUIPMENT**
VENTIL ZUR BENUTZUNG IN EINEM ROHRSCHUH
CLAPET S'UTILISANT DANS UNE INSTALLATION FLOTTANTE

(30) Priority: 18.03.1994 US 215095
(43) Date of publication of application: 02.01.1997
(73) Proprietor: WEATHERFORD U.S., INC., Wilmington, Delaware 19805 (US)
(72) Inventor: COLVARD, Ruby, Lee, Kingswells Aberdeen AB1 9GV (GB)
(74) Representative: Lucas, Brian Ronald
(86) International application number: PCT/GB95/00614
(87) International publication number: WO 95/25874

(56) References cited:
- EP-A- 0 533 369
- GB-A- 2 251 446
- US-A- 2 717 649
- US-A- 2 791 279
- US-A- 3 051 246
- US-A- 4 625 762

## Description

This invention relates to valves for use in float equipment and to float equipment including said valves.

After a well bore has been drilled it is lined with casing and the annular space between the well bore and the casing filled with cement. The cement is pumped down the inside of the casing and passes radially outward around the bottom of the casing and travels upwardly into the annular space between the well bore and the casing where it is allowed to set.

In order to prevent the cement returning into the casing before it sets a float collar or a float shoe is situated near or at the bottom of the casing.

Originally, float collars and float shoes were merely non-return valves.

The difficulty with using such float equipment was that it limited the rate at which casing could be lowered into the well since the casing tended to float and could only be lowered at an acceptable rate by pumping liquid into the casing as it was lowered.

In order to meet this problem valves were designed for use in float equipment which could be held open as the casing was lowered and then converted to a simple non-return valve.

Many ingenious mechanical devices have been proposed for this purpose. Some rely on remote control devices and timing devices whilst others rely on a force being applied through the casing, for example by dropping a ball down the casing or forcing a charge of cement through the valve.

GB-A-2 251 446 discloses a valve for use in float equipment which valve comprises means responsive to hydrostatic pressure to close said valve. It will be noted that this valve progressively closes as it is lowered down a wellbore.

According to the present invention there is provided a valve for use in float equipment, which valve comprises means responsive to hydrostatic pressure to close said valve, characterised by a frangible member to maintain said valve in an open position in which fluid can pass through said valve, the arrangement being such that, in use, when said valve is subjected to a predetermined hydrostatic pressure said frangible member will rupture and thereby permit said valve to close.

Preferably, said valve comprises a body, a valve member movably disposed in said body, said valve member having a stem and a head engageable with said body to inhibit fluid flow through said valve, a piston housing, and a piston slidably mounted in said piston housing and connected to said stem.

Advantageously, said piston and said piston housing define a chamber therebetween and said valve is biased towards an open position by compressible material in said chamber.

Preferably, said compressible material is a gas. Advantageously, said gas in said chamber is at super-atmospheric pressure.

Preferably, said frangible member comprises a diaphragm which isolates said piston from the ambient hydrostatic pressure until the ambient hydrostatic pressure is sufficient to rupture said diaphragm.

If desired said valve may include a timer arranged to inhibit movement of said piston until a predetermined time has elapsed.

If desired said valve may include a thermally deformable member arranged to inhibit movement of said piston until thermally deformed.

Preferably, said valve can be maintained in a selected one of at least two separate and distinct open positions by said frangible member.

Advantageously, said stem has a slot and said frangible member maintains said valve in a selected one of said at least two separate and distinct open positions, said frangible member supported by said piston housing and extending through said slot.

Preferably, said valve includes a spring biasing said valve member towards sealing engagement with said body.

The present invention also provides float equipment including a valve in accordance with the present invention.

For a better understanding of the present invention reference will now be made, by way of example, to the accompanying drawings, in which:-
Fig. 1 is a side cross-sectional view of a first embodiment of a valve according to the present invention in a partially open position;
Fig. 2 is a side cross-sectional view of the valve shown in Fig. 1 in a closed position;
Fig. 3 is a section taken on line III-III of Fig. 1;
Fig. 4 is a side cross-sectional view of a second embodiment of a valve according to the present invention in a partially open position;
Fig. 5 is a side cross-sectional view of a third embodiment of a valve according to the present invention in a closed position;
Fig. 6 is a side cross-sectional view of a fourth embodiment of a valve according to the present invention in a partially open position;
Fig. 7 is a side cross-sectional view of a fifth embodiment of a valve according to the present invention in a partially open position;

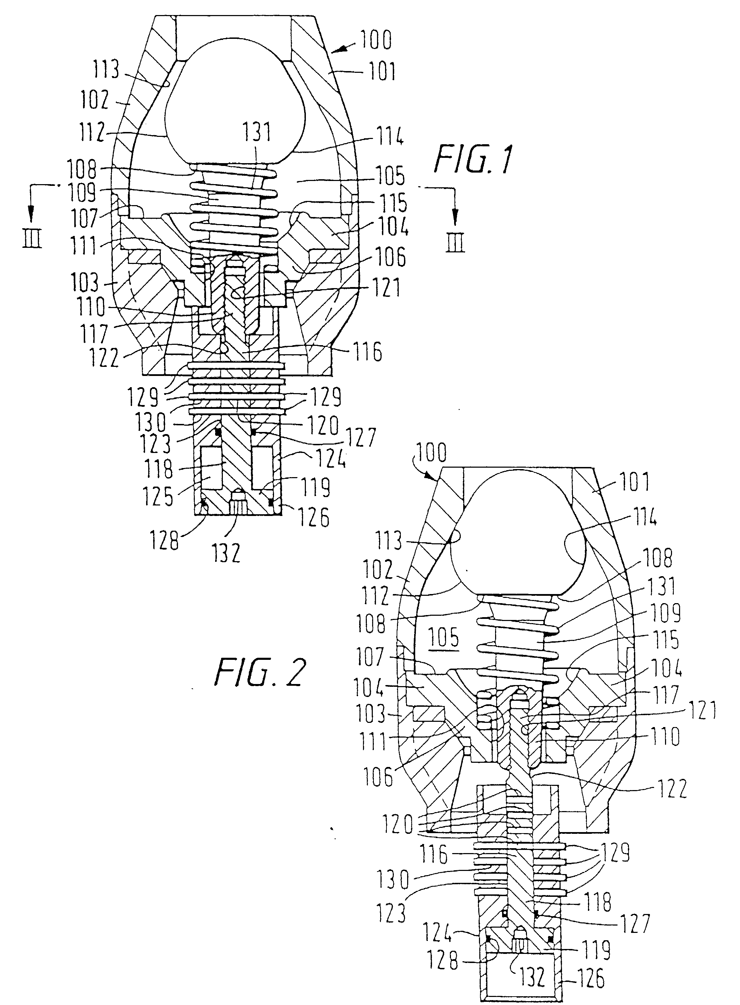

Referring now to Fig. 1, there is shown a valve which is generally identified by the reference numeral 100.

The valve 100 has a body 101 which comprises an upper section 102 secured to a lower section 103. A stem support 104 extends across a central fluid flow channel 105 of the body 101. The stem support 104 has a hub 106 and arms 107 between which fluid flows in use.

A valve member 108 having a stem 109 with a lower end 110 is movably mounted in a central channel 111 of the stem support 104. The head 112 of the valve member 108 is movable to sealingly contact an interior surface 113 of the body 101 and prevent fluid flow therethrough. The valve member 108 also has an exterior area 114 which is movable to contact a concave surface 115 on the stem support 104 in response to fluid flowing downwardly through the valve 100. Movement of the valve member 108 can effect partial restriction of the central flow channel 105 to control fluid flow without entirely stopping it.

A piston 116 has an upper end 117, a lower end 118 and an end plate 119. Four holes 120 extend through the piston 116 as shown. The upper end 117 of the piston 116 is screwed into a piston recess 121 in the stem 109.

An upper shoulder 122 of the piston 116 is movable to abut the bottom of the stem 109 to limit movement of the piston 116.

The piston 116 is slidably disposed in a central channel 123 of a piston housing 124.

The lower end 118 of the piston 116 and the end plate 119 are disposed for slidable movement in a chamber 125 formed in the lower end 126 of the piston housing 124. The chamber 125 is filled with a gas (e.g. air, nitrogen, helium, or other compressible material). The chamber 125 is defined between an O-ring 127 in a recess in the piston housing 124 and an O-ring 128 in a recess in the end plate 119.

Frangible members 129 extend through holes 130 in the piston housing 124 and through the holes 120 in the piston 116.

A spring 131 acts between the head 112 of the valve member 108 and the stem support 104.

The end plate 119 is provided with a socket 132 for accommodating a tool (not shown) to rotate the piston 116.

In use, a tool is first inserted in the socket 132 and rotated so that the piston 116 rotates relative to the stem 109 until the head 112 is spaced at a desired distance from the interior surface 113 of the body 101.

The valve 100 (which usually forms part of a float collar or a float shoe) is attached to a casing string and lowered down a well bore. The partially open valve 100 allows liquid in the well bore to enter the inside of the casing at a controlled rate and allows the casing to be lowered more rapidly than if a conventional float valve with a simple non-return valve had been used.

As the casing is lowered deeper into the well bore the hydrostatic pressure on the end plate 119 increases. At a certain pressure the frangible members 129 fail. The head 112 rises into sealing engagement with the interior surface 113 of the body 101 and the piston housing 124 falls away from the stem support 104.

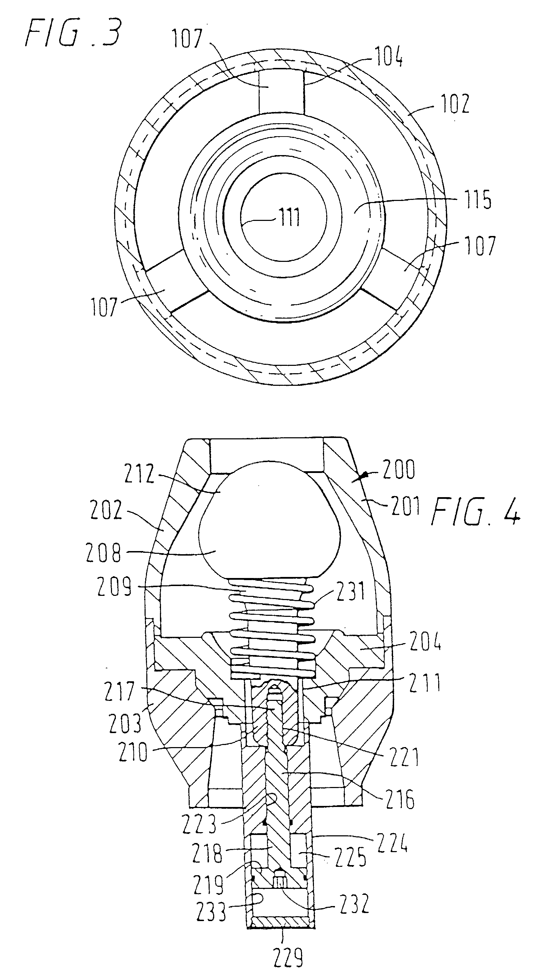

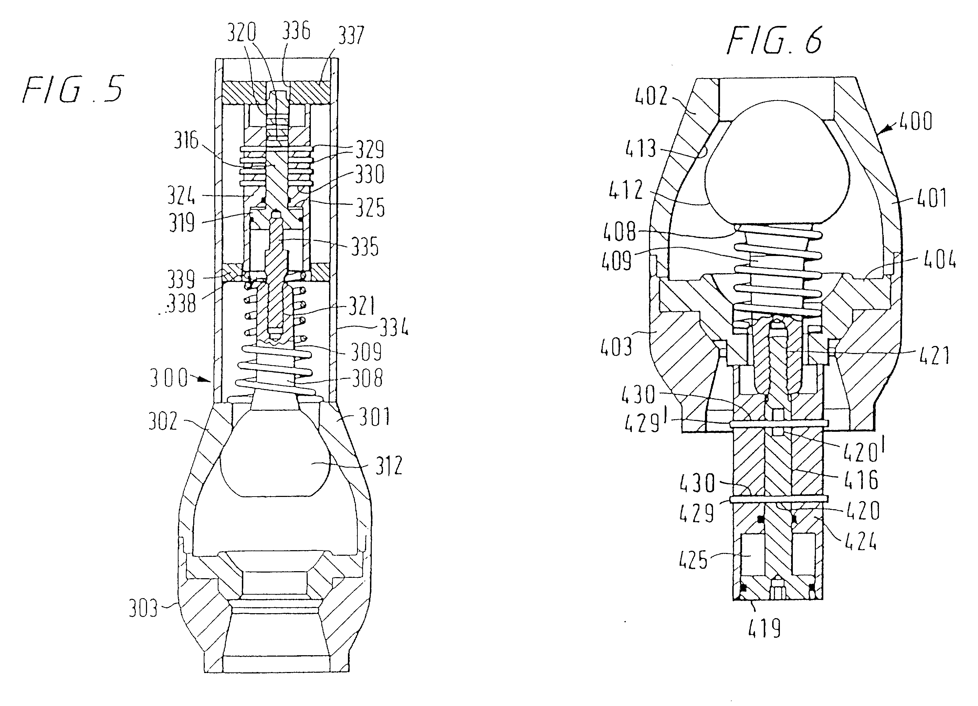

Fig. 4 shows a second embodiment of a valve according to the present invention which is generally identified by reference numeral 200. Features of the valve 200 which are similar to those shown in the valve 100 of Figures 1 to 3 have been identified by corresponding reference numerals but in the "200" series.

The valve 200 has a body 201 which includes an upper section 202 and a lower section 203 with a stem support 204 thereacross.

A valve member 208 having a stem 209 with a lower end 210 is movably mounted in a central channel 211 of the stem support 204. The valve member 208 has a head 212 for sealingly contacting the interior of the body 201.

A piston 216 has an upper end 217 screwed into a piston recess 221 in the stem 209, a lower end 218, and an end plate 219. The piston 216 is movably disposed in a central channel 223 of a piston housing 224. A chamber 225 is defined between the piston housing 224, the lower end 218 of the piston 216 and the end plate 219 in a manner similar to chamber 125 of the embodiment shown in Figures 1 to 3.

A frangible member 229 in the form of a diaphragm is threadedly mounted on the bottom of the piston housing 224 as shown.

The valve 200 is used in a similar manner to the valve 100. At the commencement of an operation the frangible member 229 is unscrewed and the valve 200 is opened by inserting a tool in socket 232 and rotating it so that the end plate 229 acts against the gas in the chamber 225 which may be compressed if desired. The frangible member 229 is then replaced.

As the casing string is lowered down the well bore the hydrostatic pressure on the frangible member 229 is increased until it ruptures allowing liquid to enter the chamber 233 and urge the piston 216 upwardly so that the head 212 comes into sealing engagement with the body 201.

Figure 5 shows a third embodiment of a valve according to the present invention. The valve, which is generally identified by reference numeral 300 comprises a body 301 having an upper section 302 and a lower section 303. The upper section 302 includes a tubular portion 334.

A valve member 308 comprising a head 312 and a stem 309 is mounted in the body 301 with the stem 309 extending upwardly from the head 312. The upper end of the stem 309 is provided with a recess 321 into which a connector 335 is screwed. The connector 335 is also connected to the end plate 319 of a piston 316, the upper end of which is slidably located in a hole 336 in a guide plate 337.

The piston 316 is mounted in a piston housing 324 the upper end of which bears against the guide plate 337 and the lower of which is slidably located in a hole 338 in a guide plate 339.

In operation the holes 320 in the stem 309 are first aligned with the holes 330 in the piston housing 324 and the required number of frangible members in the form of pins inserted therein. The valve member 308 is then rotated relative to the connector 335 to give the desired opening of the valve 300.

As the casing is lowered down the well bore the hydrostatic pressure on the end plate 319 increases until the frangible members fail. At this point the piston 316 rises lifting the connector 335 and the head 312 into sealing engagement with the body 301. The chamber 325 is compressed to minimal volume.

Fig. 6 illustrates a fourth embodiment of a valve in accordance with the invention. The valve, which is generally identified by the reference numeral 400 is generally similar to the valve 100 of Figs. 1 to 3. In particular, the valve 400 has a body 401 having an upper section 402 and a lower section 403. A stem support 404 extends across the valve body 401 and accommodates the stem 409 of a valve member 408. The valve member 408 is provided with a head 412 for sealingly contacting an interior surface 413 of the valve body 401. The stem 409 is provided with a piston recess 421 which accommodates the upper end 417 of a piston 416. The piston 416 is provided with a hole 420 and a slot 420'.

Frangible members 429 and 429' extend through holes 430 in piston housing 424 and through the hole 420 and the slot 420' respectively. Frangible member 429 has a breaking force of 1 unit and 429' has a breaking force of 5 units.

In operation, as the valve 400 is lowered down a well bore the hydrostatic pressure increases. When the pressure on the end plate 419 of the piston 416 reaches a certain level frangible member 429 fails. This allows the piston 416 to move upwardly but only to a position where the bottom of the slot 420' engages the frangible member 429'. This movement only partially closes the valve 400 since the head 412 does not contact the interior surface of the valve body 401 at this stage.

As the valve 400 is further lowered the hydrostatic pressure progressively increases until the frangible member 429' fails at which time the valve 400 closes.

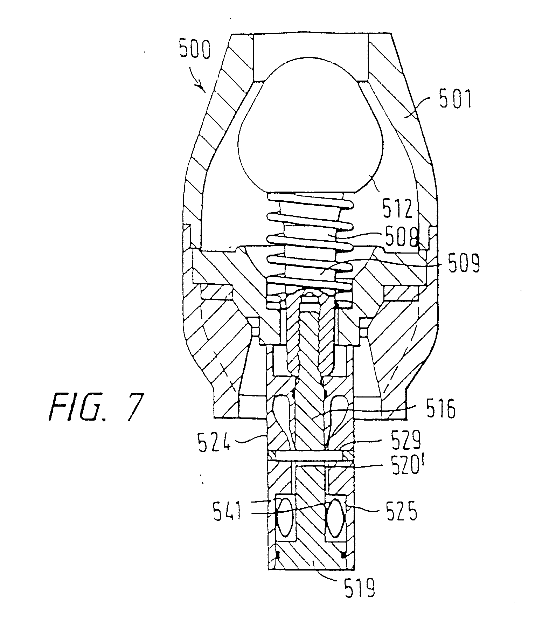

Fig. 7 discloses a fifth embodiment of a valve according to the present invention. The valve, which is generally identified by the reference numeral 500, is generally similar to that shown in Figure 6 except that the chamber 525 contains (or is formed by) one or more frangible capsules 541.

In use, as the valve 500 is lowered down a well bore the end plate 519 ruptures the capsules 541. The head 512 partially closes to the extent permitted by the slot 520'. At the same time chemicals are released from the capsules which degrade the member 529.

## Claims

1. A valve (100; 200; 300; 400; 500) for use in float equipment, which valve comprises means (119; 219; 319; 419; 519) responsive to hydrostatic pressure to close said valve, characterised by a frangible member (129; 229; 329; 429; 429'; 529) to maintain said valve in an open position in which fluid can pass through said valve, the arrangement being such that, in use, when said valve is subjected to a predetermined hydrostatic pressure said frangible member will rupture and thereby permit said valve to close.

2. A valve as claimed in Claim 1, comprising a body (101; 201; 301; 401; 501), a valve member (108; 208; 308; 408; 508) movably disposed in said body, said valve member having a stem and a head engageable with said body to inhibit fluid flow through said valve, a piston housing (124; 224; 324; 424; 524), and a piston (116; 216; 316; 416; 516) slidably mounted in said piston housing and connected to said stem.

3. A valve as claimed in Claim 2, wherein said piston and said piston housing define a chamber (125; 225; 325; 425; 525) therebetween and said valve is biased towards an open position by compressible material in said chamber.

4. A valve as claimed in Claim 3, wherein said compressible material is a gas.

5. A valve as claimed in Claim 4, wherein said gas in said chamber is at super-atmospheric pressure.

6. A valve as claimed in any of Claims 2 to 5, wherein said frangible member comprises a diaphragm (229) which isolates said piston from the ambient hydrostatic pressure until the ambient hydrostatic pressure is sufficient to rupture said diaphragm.

7. A valve as claimed in any of Claims 2 to 6, including a timer arranged to inhibit movement of said piston until a predetermined time has elapsed.

8. A valve as claimed in any of Claims 2 to 7, including a thermally deformable member arranged to inhibit movement of said piston until thermally deformed.

9. A valve as claimed in any of Claims 2 to 8, wherein said valve can be maintained in a selected one of at least two separate and distinct open positions by said frangible member.

10. A valve as claimed in Claim 9, wherein said stem has a slot (420'; 520') and said frangible member maintains said valve in a selected one of said at least two separate and distinct open positions, said frangible member supported by said piston housing and extending through said slot.

11. A valve as claimed in any of Claims 2 to 10, including a spring (131; 231) biasing said valve member towards sealing engagement with said body.

12. Float equipment including a valve as claimed in any preceding claim.

## Patentansprüche

1. Ventil (100; 200; 300; 400; 500) zur Verwendung in einer Schwimmereinrichtung, wobei das Ventil Mittel (119; 219; 319; 419; 519) aufweist, die auf hydrostatischen Druck ansprechen, um das Ventil zu schließen, gekennzeichnet durch ein Sollbruchteil (129; 229; 329; 429; 429'; 529), um das Ventil in einer geöffneten Position zu halten, bei welcher Flüssigkeit durch das Ventil hindurchtreten kann, wobei die Anordnung so ausgebildet ist, daß beim Einsatz, wenn das Ventil einem vorbestimmten hydrostatischen Druck unterworfen wird, das Sollbruchteil bricht und es dadurch dem Ventil ermöglicht wird, zu schließen.

2. Ventil nach Anspruch 1, bestehend aus einem Körper (101; 201; 301; 401; 501), einem Ventilteil (108; 208; 308; 408; 508), das in dem Körper beweglich angeordnet ist, wobei das Ventilteil einen Schaft und einen Kopf hat, der den Körper berühren kann, um eine Flüssigkeitsströmung durch das Ventil zu verhindern,
einem Kolbengehäuse (124; 224; 324; 424; 524) und
einem Kolben (116; 216; 316; 416; 516), der in dem Kolbengehäuse verschiebbar angeordnet und mit dem Ventilschaft verbunden ist.

3. Ventil nach Anspruch 2, dessen Kolben und Kolbengehäuse eine Kammer (125; 225; 325; 425; 525) zwischen sich bilden, wobei das Ventil durch eine kompressible Materie in der Kammer in Richtung der Öffnungsposition vorgespannt ist.

4. Ventil nach Anspruch 3, in welchem die kompressible Materie ein Gas ist.

5. Ventil nach Anspruch 4, in welchem das Gas in der Kammer einen überatmosphärischen Druck hat.

6. Ventil nach einem der Ansprüche 2 bis 5, in welchem das Sollbruchteil aus einer Membran (229) besteht, die den Kolben von dem umgebenden hydrostatischen Druck trennt bis der umgebende hydrostatische Druck ausreicht, die Membran zu zerbrechen.

7. Ventil nach einem der Ansprüche 2 bis 6 mit einem Zeitgeber, der vorgesehen ist, um die Bewegung des Kolbens zu verhindern, bis eine vorgegebene Zeit abgelaufen ist.

8. Ventil nach einem der Ansprüche 2 bis 7 mit einem thermisch deformierbaren Teil, das angeordnet ist, um die Bewegung des Kolbens zu verhindern, bis es durch Wärme verformt ist.

9. Ventil nach einem der Ansprüche 2 bis 8, wobei durch das Sollbruchteil das Ventil wählbar in einer von wenigstens zwei getrennten und unterschiedlichen Öffnungspositionen gehalten werden kann.

10. Ventil nach Anspruch 9, in welchem der Schaft einen Schlitz (420';520') aufweist und das Sollbruchteil das Ventil in einer ausgewählten von wenigstens zwei separaten und unterschiedlichen Öffnungspositionen hält, wobei das Sollbruchteil durch das Kolbengehäuse gestützt wird und sich durch den Schlitz erstreckt.

11. Ventil nach einem der Ansprüche 2 bis 10 mit einer Feder (131; 231), welche das Ventilteil in Richtung auf die dichtende Berührung mit dem Ventilkörper vorspannt.

12. Schwimmereinrichtung mit einem Ventil nach jedem vorhergehenden Anspruch.

## Revendications

1. Vanne (100; 200; 300; 400; 500 ) destinée à être utilisée dans un dispositif flotteur, ladite vanne comprenant des moyens (119; 219; 319; 419; 519) qui réagissent à la pression hydrostatique pour fermer ladite vanne, caractérisée par un élément frangible (129; 229; 329; 429; 429'; 529) destiné à maintenir ladite vanne dans une position ouverte dans laquelle un fluide peut la traverser, l'agencement étant tel que pendant l'utilisation, lorsque ladite vanne est soumise à une pression hydrostatique prédéterminée, ledit élément frangible va se rompre et permettre ainsi la fermeture de la vanne.

2. Vanne selon la revendication 1, comprenant un corps (101; 201 ; 301 ; 401 ; 501), un élément de vanne (108; 208; 308; 408: 508) disposé de façon déplaçable dans ledit corps, ledit élément de vanne ayant une tige et une tête pouvant entrer en contact mécanique avec ledit corps pour empêcher l'écoulement du fluide à travers ladite vanne, un boitier de piston (124; 224 ; 324; 424; 524 ) et un piston (116 ; 216; 316; 416; 516) monté de façon à coulisser dans ledit boitier de piston et raccordé à ladite tige.

3. Vanne selon la revendication 2, dans laquelle ledit piston et ledit boitier de piston définissent entre eux une chambre (125; 225 ; 325 ; 425 ; 525 ) et ladite vanne est déplacée en biais vers une position ouverte par un matériau compressible dans ladite chambre.

4. Vanne selon la revendication 3, dans laquelle ledit matériau compressible est un gaz.

5. Vanne selon la revendication 4, dans laquelle ledit gaz dans ladite chambre est à une pression super-atmosphérique.

6. Vanne selon l'une quelconque des revendications 2 à 5, dans laquelle ledit élément frangible comprend un diaphragme (229) qui isole ledit piston de la pression hydrostatique ambiante jusqu'à ce que la pression hydrostatique ambiante soit suffisante pour rompre ledit diaphragme.

7. Vanne selon l'une quelconque des revendications 2 à 6, comprenant une horloge réglée de façon à empêcher le déplacement dudit piston jusqu'à ce qu'un temps prédéterminé se soit écoulé.

8. Vanne selon l'une quelconque des revendications 2 à 7, comprenant un élément susceptible de subir une déformation thermique, agencé de façon à empêcher le déplacement dudit piston jusqu'à ce que la déformation thermique se produise.

9. Vanne selon l'une quelconque des revendications 2 à 8, dans laquelle ladite vanne peut être maintenue dans l'une d'au moins deux positions ouvertes séparées et distinctes par ledit élément frangible.

10. Vanne selon la revendication 9, dans laquelle ladite tige présente une fente (420'; 520') et ledit élément frangible maintient ladite vanne dans l'une d'au moins deux positions ouvertes séparées et distinctes, ledit élément frangible étant soutenu par ledit boitier de piston et s'étendant à travers ladite fente.

11. Vanne selon l'une quelconque des revendications 2 à 10, comprenant un ressort (131 ; 231) déplaçant en biais ledit élément de vanne vers un contact d'étanchéité avec ledit corps.

12. Dispositif flotteur comprenant une vanne telle que revendiquée dans l'une quelconque des revendications précédentes.
